# EUROPEAN PATENT SPECIFICATION

(11) **EP 3 083 817 B1**
(45) Date of publication and mention of the grant of the patent: **07.06.2023**
(21) Application number: 14814867.9
(22) Date of filing: 17.12.2014
(51) Int. Cl.: C08L 23/08, H01B 3/44, C08L 43/04

(54) **A POLYMER COMPOSITION COMPRISING A CROSSLINKABLE POLYOLEFIN WITH HYDROLYSABLE SILANE GROUPS AND CATALYST**
POLYMERZUSAMMENSETZUNG MIT EINEM VERNETZBAREN POLYOLEFIN MIT HYDROLYSIERBAREN SILANGRUPPEN UND KATALYSATOR
COMPOSITION POLYMÈRE COMPRENANT UNE POLYOLÉFINE RÉTICULABLE AVEC DES GROUPES SILANE HYDROLYSABLES ET CATALYSEUR

(30) Priority: 18.12.2013 EP 13197978
(43) Date of publication of application: 26.10.2016
(73) Proprietor: Borealis AG, 1020 Vienna (AT)
(72) Inventor: FAGRELL, Ola, 444 45 Stenungsund (SE); HELLSTRÖM, Stefan, 442 42 Kungälv (SE); SULTAN, Bernt-Åke, 444 42 Stenungsund (SE); NYLANDER, Perry, 41261 Göteborg (SE); ANKER, Martin, 42543 Hisings Kärra (SE); DAHLEN, Kristian, 44460 Stora Höga (SE); HERMANSSON, Åsa, 416 48 Göteborg (SE)
(74) Representative: Kador & Partner Part mbB
(86) International application number: PCT/EP2014/078325
(87) International publication number: WO 2015/091706

(56) References cited:
- EP-A1- 1 862 500
- EP-A1- 2 508 558

## Description

### Field of invention

The present invention relates to a new polymer composition, an article, for example, a coating, a wire or a cable, comprising the polymer composition, a process for producing an article and use of the polymer composition.

### Background

It is known to crosslink polymers by means of additives. Crosslinking improves properties of the polymer such as mechanical strength and heat resistance.

Polymers normally considered to be thermoplastics, and not crosslinkable, can also be made crosslinkable by introducing crosslinkable groups in the polymer. Examples thereof are polymer compositions comprising polyolefins, such as polyethylenes, where silane compounds have been introduced as crosslinkable groups, e.g. by grafting silane compounds onto a prepared polyolefin, or by copolymerisation of an olefin and a silane compound. Such techniques are known e.g. from US4413066, US4297310, US4351876, US4397981, US4446283 and US4456704.

The crosslinking of polymer compositions comprising hydrolysable silane groups with catalysts is known in the art, see e.g. EP0736065. It is further known that the crosslinking process may advantageously be carried out in the presence of acidic silanol condensation catalysts. The acidic silanol condensation catalysts permit crosslinking of silane-containing polymer compositions already at room temperature (about 20 to 25°C). Examples of such acidic silanol condensation catalysts which are organic sulphonic acids, or precursors of such acids, are disclosed in, for example, WO95/17463, EP1309631, EP1309632 and EP1849816.

Patent document EP1862500 describes a polymer composition comprising a silane cross-linkable polymer used for producing cables. The polymer composition is prepared by adding a polyolefin bearing hydrolysable silane group to a masterbatch comprising an ethylene-acrylate copolymer, a sulfonic acid catalyst and a silane-contaning compound as a drying agent. The polymer composition is under the form of a master batch. The catalyst present in the masterbatch composition is preferably an aromatic organic sulphonic acid compound. One of the preferred sulphonic acid compounds is an alkyl naphthyl sulfonic acid wherein the alkyl group comprises 12 carbon atoms.

Patent document EP2508558 describes a polymer composition comprising a polyolefin bearing a hydrolysable silane group, a scorch retarding compound and a silanol condensation catalyst. The silanol condensation catalyst may be an aromatic sulfonic compound of general formula Ar(SO₃H)ₓ wherein x>1. The scorch retarding compound may be hexadecyl trimethoxy silane HDTMS.

Further, the condensation catalyst needs to show good compatibility with the used crosslinkable polymer system. It is also desired that the condensation catalyst and the crosslinkable polymer system together achieve an effective crosslinking both as concerns crosslinking speed and obtained degree of crosslinking, and that the polymer composition enables a scorch free production of the polymer article. Since water, besides silane functionality and catalyst, is needed for silane hydrolysis and condensation, the water needs to be controlled during the manufacturing of the polymer article. If significant amounts of water are present, crosslinking reactions will start already during production of the polymer article, e.g. extrusion, resulting in pre-crosslinked gels i.e. scorch.

### Description of the invention

It has now surprisingly been found that this object can be achieved by use of polymer composition comprising a silane containing drying agent, a specific silanol condensation catalyst of the Brönstedt acid type which has a water content of 0.1 % by weight or lower. The polymer composition relating to the present invention allows a significant reduction of the water content enabling an excellent control of water during manufacturing of the polymer article and a scorch-free production. Furthermore, the low water content will give an increased storage stability of the catalyst masterbatch in terms of water absorption relative to maintaining a scorch-free production.

Furthermore, the catalyst is added to the polymer composition comprising a silane containing drying agent via a catalyst master batch. For proper crosslinking it is essential that the catalyst master batch is blended and evenly distributed in the base resin so the catalyst have short way to, and could easily, migrate into the silane groups in the polymer composition, i.e. the base resin. Further, to receive a good smooth cable surface, of the melt comprising of the base resin, the catalyst and, possibly, also a colour-Mb, a good melt homogenisation is required. Processing conditions like the design of the extruder screw, length of the extruder, screw speed, melt temperatures are essential parameters for receiving such homogenised melt but it is also essential that the base resin and master batches mix easily with each other and form a stable blend. An exemplified catalyst master batch comprises an olefin, which can be added to the polymer composition in liquid or solid form. If the catalyst master batch is solid an exemplified carrier is a polyethylene.

Thus, the present invention provides a new polymer composition which effectively promotes the desired crosslinking performance and produces a scorch-free crosslinked polymer product.

The new polymer composition comprises a silane containing drying agent and at least one silanol condensation catalyst, wherein each catalyst has a water content which is 0.1 % by weight, or lower, and is selected from:
**i**) a compound of formula **I**

   ArSO₃H **(I)**

   or a precursor thereof, wherein
   **Ar** is an 1 to 4 alkyl groups substituted aryl, wherein the aryl is phenyl or naphthyl, and wherein each alkyl group, independently, is a linear or branched alkyl with 10 to 30 carbons, wherein the total number of carbons in the alkyl groups is in the range of 20 to 80 carbons;
   **ii**) a derivative of **i**) selected from the group consisting of an anhydride, an ester, an acetylate, an epoxy blocked ester and an amine salt thereof which is hydrolysable to the corresponding compound of formula **I**; and
   **iii**) a metal salt of **i**) wherein the metal ion is selected from the group consisting of copper, aluminum, tin and zinc.

The polymer composition of the present invention comprises a silane containing drying agent. The silane containing drying agent reduces the free water content of the polymer composition. Further, the silane containing drying agent may, for example, be HDTMS hexadecyltrimethoxysilane or vinyl tri-methoxy silane (VTMS) or vinyl tri-ethoxy silane (VTES). In a further embodiment of the present invention, the silane containing drying agent is HDTMS. In still a further embodiment of the present invention, the silane containing drying agent is an anhydride.

The polymer composition of the present invention do also comprise the "at least one silanol condensation catalyst", wherein each catalyst has a water content which is 0.1 % by weight, or lower, and is selected from:
**i**) a compound of formula **I**

   ArSO₃H **(I)**

   or a precursor thereof, wherein
   **Ar** is an 1 to 4 alkyl groups substituted aryl, wherein the aryl is phenyl or naphthyl, and wherein each alkyl group, independently, is a linear or branched alkyl with 10 to 30 carbons, wherein the total number of carbons in the alkyl groups is in the range of 20 to 80 carbons;
   **ii**) a derivative of **i**) selected from the group consisting of an anhydride, an ester, an acetylate, an epoxy blocked ester and an amine salt thereof which is hydrolysable to the corresponding compound of formula **I**; and
   **iii**) a metal salt of **i**) wherein the metal ion is selected from the group consisting of copper, aluminum, tin and zinc.

Further, each catalyst of the "at least one silanol condensation catalyst" has a water content which is 0.1 % by weight, or lower. Said water content may be achieved in any suitable way known by a person skilled in the art, for example, by drying the silanol condensation catalyst and/or by using a dry process, e.g. comprising pre-drying of reactants and reaction in an inert atmosphere, in the preparation of the silanol condensation catalyst.

**Ar** of the compound of formula **I**, may, besides the "1 to 4 alkyl groups"-substituents, also, optionally, comprise further suitable substituents.

An embodiment of the present invention provides a polymer composition, as described herein, wherein said each silanol condensation catalyst is selected from **a)** C₁₂-alkylated naphthyl sulfonic acids;
**b**) a derivative of **a**) selected from the group consisting of an anhydride, an ester, an acetylate, an epoxy blocked ester and an amine salt thereof which is hydrolysable to the corresponding compound **a**); and/or
**c**) a metal salt of **a**) wherein the metal ion is selected from the group consisting of copper, aluminum, tin and zinc.

A further embodiment of the present invention provides a polymer composition, as described herein, wherein said each silanol condensation catalyst is selected from C₁₂-alkylated naphthyl sulfonic acids.

In further embodiments of the present invention, the "at least one" silanol condensation catalyst of the polymer composition has each a water content which is 0.09 % by weight, or lower; 0.08 % by weight, or lower; 0.07 % by weight, or lower; 0.06 % by weight, or lower; or, alternatively, 0.05 % by weight, or lower.

A further embodiment of the present invention provides a new polymer composition, wherein the polymer composition is a silanol condensation catalyst masterbatch and effectively promotes the desired crosslinking performance and produces a scorch-free crosslinked polymer product.

The new polymer composition, which is a silanol condensation catalyst masterbatch, comprises a matrix, a silane containing drying agent and at least one silanol condensation catalyst, wherein each catalyst has a water content which is 0.1 % by weight, or lower, and is selected from:
**i**) a compound of formula **I**

   ArSO₃H **(I)**

   or a precursor thereof, wherein
   **Ar** is an 1 to 4 alkyl groups substituted aryl, wherein the aryl is phenyl or naphthyl, and wherein each alkyl group, independently, is a linear or branched alkyl with 10 to 30 carbons, wherein the total number of carbons in the alkyl groups is in the range of 20 to 80 carbons;
**ii**) a derivative of **i**) selected from the group consisting of an anhydride, an ester, an acetylate, an epoxy blocked ester and an amine salt thereof which is hydrolysable to the corresponding compound of formula **I**; and
**iii**) a metal salt of **i**) wherein the metal ion is selected from the group consisting of copper, aluminum, tin and zinc.

Further, when the polymer composition of the present invention is a silanol condensation catalyst masterbatch which further comprises a matrix, the polymer composition may further be as described in any embodiment herein.

The matrix may, for example, be an olefin matrix or a polymer matrix. Further, the matrix may be in a liquid or solid form. When the matrix is a polymer matrix, the polymer matrix may comprise, for example, a polyolefin, e.g., a polyethylene, which may be a homo- or copolymer of ethylene, e.g. low density polyethylene, or a polyethylene-methyl-ethyl-butyl-acrylate copolymer containing 1 to 50 percent by weight of the acrylate, or any mixtures thereof. Furthermore, the polymer matrix may comprise a high density or medium density polyethylene. Further, the polymer matrix may comprise a bimodal polymer.

The new polymer composition, which is a silanol condensation catalyst masterbatch, comprises a polymer matrix, a silane containing drying agent and at least one silanol condensation catalyst, wherein each catalyst has a water content which is 0.1 % by weight, or lower, and is selected from:
**i**) a compound of formula **I**

   ArSO₃H **(I)**

   or a precursor thereof, wherein
   **Ar** is an 1 to 4 alkyl groups substituted aryl, wherein the aryl is phenyl or naphthyl, and wherein each alkyl group, independently, is a linear or branched alkyl with 10 to 30 carbons, wherein the total number of carbons in the alkyl groups is in the range of 20 to 80 carbons;
**ii**) a derivative of **i**) selected from the group consisting of an anhydride, an ester, an acetylate, an epoxy blocked ester and an amine salt thereof which is hydrolysable to the corresponding compound of formula **I**; and
**iii**) a metal salt of **i**) wherein the metal ion is selected from the group consisting of copper, aluminum, tin and zinc.

In a further embodiment of the present invention, the polymer composition is a silanol condensation catalyst masterbatch which further comprises a polymer matrix.

When the polymer composition in accordance with the present invention is a silanol condensation catalyst masterbatch, said silanol condensation catalyst masterbatch is a mixture which comprises the silane containing drying agent and the "at least one" silanol condensation catalyst, i.e. the compound of formula I, both in a concentrated form in said matrix. Further, each "at least one" silanol condensation catalyst do also have a water content which is 0.1 % by weight or lower in said matrix.

Further, when the polymer composition in accordance with the present invention is a silanol condensation catalyst masterbatch, said silanol condensation catalyst masterbatch may be produced by compounding the silane containing drying agent, the "at least one" silanol condensation catalyst and, optionally, any further additives with a polymer resin (i.e. a carrier resin), whereby the polymer resin forms the matrix.

The further, optional, additives may, for example, be miscible thermoplastics, antioxidants, stabilizers, lubricants, fillers, peroxides, silanes and/or foaming agents.

The silanol condensation catalyst masterbatch in accordance with the present invention may be in a liquid form or a solid form suitably formed into, for example, a powder and/or granular shaped solids, e.g. pellets or granules.

Furthermore, prior to a crosslinking of a polymer, handling of the "at least one" silanol condensation catalyst, i.e. the compound of formula **I**, and the silane containing drying agent may be facilitated when added in concentrated form as the silanol condensation catalyst masterbatch.

In an embodiment in accordance with present invention the matrix is a polymer matrix, which polymer matrix may comprise, for example, a polyolefin, e.g., a polyethylene, which may be a homo- or copolymer of ethylene, e.g. low density polyethylene, or a polyethylene-methyl-ethyl-butyl-acrylate copolymer containing 1 to 50 percent by weight of the acrylate, or any mixtures thereof. Furthermore, the polymer matrix may comprise a high density or medium density polyethylene. Further, the polymer matrix may comprise a bimodal polymer.

In still a further embodiment of the present invention, the polymer composition further comprises a crosslinkable polyolefin with hydrolysable silane groups.

The crosslinkable polyolefin of the polymer composition may, for example, comprise a polyethylene with hydrolysable silane groups, or the crosslinkable polyolefin may, e.g., consist of a polyethylene with hydrolysable silane groups.

The hydrolysable silane groups may be introduced into the polyolefin by copolymerisation of, e.g., ethylene monomers with silane group containing comonomers or by grafting, i.e. by chemical modification of the polyolefin by addition of silane groups mostly in a radical reaction. Both techniques are well known in the art.

Moreover, the crosslinkable polyolefin with hydrolysable silane groups may be obtained by copolymerisation. In the case of polyolefin being, for example, polyethylene, the copolymerisation may be carried out with an unsaturated silane compound represented by the formula **II**

R¹SiR²_{q}Y_{3-q} (**II**)

wherein
**R¹** is an ethylenically unsaturated alkyl, alkyloxy or (meth)acryloxy alkyl group,
**R²** is an aliphatic saturated alkyl group,
**Y** which may be the same or different, is a hydrolysable organic group and
**q** is 0, 1 or 2.

Special examples of the unsaturated silane compound are those wherein **R¹** is vinyl, allyl, isopropenyl, butenyl, cyclohexanyl or gamma-(meth)acryloxy propyl; **Y** is methoxy, ethoxy, formyloxy, acetoxy, propionyloxy or an alkyl-or arylamino group; and R2, if present, is a methyl, ethyl, propyl, decyl or phenyl group.

In even a further embodiment the unsaturated silane compound may be represented by the formula **III**

CH₂=CHSi(OA)₃ (**III**)

wherein **A** is a alkyl group having 1 to 8 carbon atoms, e.g., 1 to 4 carbon atoms.

In further embodiments of the present invention the silane compound may be, e.g., vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, or vinyl triacetoxy silane.

Said copolymerisation may be carried out under any suitable conditions resulting in the copolymerisation of two monomers.

Moreover, the copolymerisation may be implemented in the presence of one or more other comonomers which can be copolymerised with the two monomers. Such comonomers include, for example, vinyl carboxylate esters, such as vinyl acetate and vinyl pivalate, alpha-olefins, such as propene, 1-butene, 1-hexane, 1-octene and 4-methyl-1-pentene, (meth)acrylates, such as methyl(meth)acrylate, ethyl(meth)acrylate and butyl(meth)acrylate, olefinically unsaturated carboxylic acids, such as (meth)acrylic acid, maleic acid and fumaric acid, (meth)acrylic acid derivatives, such as (meth)acrylonitrile and (meth)acrylic amide, vinyl ethers, such as vinyl methyl ether and vinyl phenyl ether, and aromatic vinyl compounds, such as styrene and alpha-ethyl styrene.

In still further embodiments of the present invention, said comonomers may be vinyl esters of monocarboxylic acids having 1 to 4 carbon atoms, such as vinyl acetate, and/or (meth)acrylate of alcohols having 1 to 4 carbon atoms, such as methyl(meth)-acrylate.

In even further embodiments of the present invention, the comonomers: butyl acrylate, ethyl acrylate and/or methyl acrylate are disclosed.

Two or more comonomers, such as any of the olefinically unsaturated compounds disclosed herein, may be used in combination. The term "(meth)acrylic acid" is intended to embrace both acrylic acid and methacrylic acid. The comonomer content of the copolymer may amount to 70% by weight of the copolymer, for example, about 0.5 to 35% by weight, e.g., about 1 to 30% by weight.

If a graft polymer is used, it may have been produced e.g. by any of the two methods described in US3646155 and US4117195, respectively.

The polyolefin with hydrolysable silane groups, which is comprised in the polymer composition of the present invention, may contain 0.001 to 15% by weight of silane compound, for example, 0.01 to 5% by weight, e.g., 0.1 to 2% by weight.

In further embodiment of the present invention, a polymer composition, as described herein, is disclosed, wherein the polymer composition comprises the silane containing drying agent in an amount that renders the water content of the polymer composition to be 100 ppm or less.

The polymer composition relating to the present invention allows a significant reduction of the water content enabling an excellent control of water during manufacturing of the polymer article and a scorch-free production. Furthermore, the low water content will give an increased storage stability of the catalyst masterbatch in terms of water absorption relative to maintaining a scorch-free production.

Further, compounding of an acid containing catalyst master batch requires low water content. Water in combination with an acid will corrode the screw and liners of the compounding unit fast. Without water there will be no corrosion. Thus, control of the water content is essential during compounding. Water content can be reduced by pre-drying of the different components but only to a certain moisture content. To receive a very dry melt additional chemical reaction, or absorption of the water molecule by addition of a drying agent, is necessary. Especially important is that the sulfonic acid, i.e. the catalyst, is dry before it enter the compounding unit as it will act corrosive also before addition of the drying agent in the compounding unit. In addition, if the different components are not dry enough when enter the compounding unit, it will require a bigger amount of drying agent to reduce the water. To much drying agent might have other negative effect on other properties of the catalyst master bath. To use dry raw materials in the addition with a drying agent is essential to balance the final properties.

In further embodiments of the present invention, **Ar** of the compound of formula **I**, is a 1, 2, 3 or 4 alkyl groups substituted aryl, for example, a 2 to 3 alkyl groups substituted aryl, or, e.g., a 2 alkyl groups substituted aryl. Further, said aryl is phenyl or naphthyl, e.g. naphthyl.

In an embodiment of the present invention, **Ar** is naphthyl being substituted by e.g. 2 alkyl groups.

Furthermore, each alkyl group, independently, is a linear or branched alkyl with 10 to 30 carbons, wherein the total number of carbons in the alkyl groups is in the range of 20 to 80 carbons.

In a further embodiment of the present invention, each alkyl group, independently, is a linear alkyl with 10 to 15 carbons, wherein the total number of carbons in the alkyl groups is in the range of 20 to 60 carbons.

In still a further embodiment of the present invention, any two of said alkyl groups may be linked to each other via a bridging group such as an alkylene group.

The silanol condensation catalyst may also be a derivative of the compound of formula **I** as described herein, wherein said derivative may be converted by hydrolysis to the compound of formula **I**. The derivative may, for example, be a corresponding acid anhydride of the compound of formula **I**. Alternatively, the derivative may be a compound of formula **I** which has been provided with a hydrolysable protective group, as, e.g., an acetyl group. The hydrolysable protective group can be removed by hydrolysis.

In a further embodiment the polymer composition according to the present invention comprises the "at least one" silanol condensation catalyst in an amount of, for example, 0.0001 to 8 % by weight, 0.0001 to 6 % by weight, 0.001 to 2 % by weight, 0.05 to 1 % by weight, 1 to 8 % by weight or 1 to 6 % by weight.

In still a further embodiment wherein the polymer composition is the silanol condensation catalyst masterbatch according to the present invention the silanol condensation catalyst masterbatch comprises the "at least one" silanol condensation catalyst in an amount of, for example, 0.7 to 8 % by weight, 0.7 to 6 % by, 1 to 8 % by weight or 1 to 6 % by weight.

In an even further embodiment of the present invention, a polymer composition, as described herein, is disclosed, wherein each catalyst has a water content which is 0.08 % by weight or lower.

In still a further embodiment of the present invention, a polymer composition, as described herein, is disclosed, wherein each catalyst has a water content which is 0.06 % by weight or lower.

A further embodiment of the present invention discloses a polymer composition, as described herein, wherein each catalyst has a water content which is 0.05 % by weight or lower.

The polymer composition according to the invention may further comprise various additives, for example, miscible thermoplastics, antioxidants, stabilizers, lubricants, fillers, pigments, peroxides, silanes and/or foaming agents. Examples of suitable fillers and/or pigments include TiO₂, CaCO₃, carbon black (e.g. "UV black", i.e. a carbon black that absorbs ultraviolet radiation), huntite, mica, kaolin, aluminium hydroxide (ATH), magnesium dihydroxide (MDH), and SiO₂.

In still a further embodiment the polymer composition according to the present invention further comprises fillers and/or pigments.

Furthermore, said fillers and/or pigments may be comprised in the polymer composition according to the present invention in amounts of, for example, 0.01 to 5 wt%, or, e.g., 0.01 to 2 wt%.

As antioxidant, a compound, or a mixture of compounds, may, for example, be used. The antioxidant may, suitably, be neutral or acidic compounds, and which compounds may, suitably, comprise a sterically hindered phenol group or aliphatic sulphur groups. Such compounds are disclosed in EP1254923 and these are suitable antioxidants for stabilisation of polyolefins containing hydrolysable silane groups which are crosslinked with a silanol condensation catalyst, e.g., an acidic silanol condensation catalyst. Other exemplified antioxidants are disclosed in WO2005003199.

Moreover, the antioxidant may be present in the polymer composition in an amount of from 0.01 to 3 wt%, e.g., 0.05 to 2 wt%, or, e.g., 0.08 to 1.5 wt%.

In accordance with the present invention the silane containing drying agent, the "at least one" silanol condensation catalyst and the crosslinkable polyolefin may suitably be mixed to produce the polymer composition of the present invention, by compounding a crosslinkable polyolefin together with one or more additive masterbatches. The one or more additive masterbatches may suitably include the silanol condensation catalyst masterbatch of the present invention as described herein.

Said compounding may be performed by any known compounding process, including extruding the final product with a screw extruder or a kneader.

Further, the one or more additive masterbatches comprise said silane containing drying agent, said "at least one" catalyst and/or, optionally, further additives, respectively, in concentrated form in their polymer matrices, e.g. polyolefin matrices.

Alternatively, one or more of the silane containing drying agent, the "at least one" silanol condensation catalyst and the, optional, further additives, need not to be added as comprised in masterbatches but may instead be added , e.g. in liquid form, directly to a system for production of the polymer composition of the present invention.

The further, optional, additives may be may be as already described herein.

The matrix or matrices of the one or more additive masterbatches may suitably be as the matrix of the silanol condensation catalyst as described herein.

Further, the silanol condensation catalyst masterbatch, the additive masterbatch or masterbatches comprise said "at least one" catalyst, said silane containing drying agent and, optionally, further additives, in concentrated form. The wording "concentrated form" means herein that said "at least one" catalyst, said silane containing drying agent and the optional further additives have higher concentration in said masterbatches as compared with their concentration in the final crosslinkable polymer composition.

In further embodiments of the present invention a silanol condensation catalyst masterbatch or an additive masterbatch, as described herein, may, for example, comprise the "at least one" silanol condensation catalyst in an amount of, for example, 0.7 to 8 % by weight, 0.7 to 6 % by, 1 to 8 % by weight or 1 to 6 % by weight.

Further in accordance with the present invention, when a silanol condensation catalyst masterbatch or an additive masterbatch, as described herein, is compounded with said polymer composition comprising said crosslinkable polyolefin, the silanol condensation catalyst masterbatch or the additive masterbatch may be present in an amount of 1 to 10 wt%, for example, 2 to 8 wt%.

If a pigment is used in the polymer composition, the pigment may, for example, be added via a separate additive masterbatch, i.e. a pigment masterbatch, in an amount of 0.01 to 5 % by weight. Said pigment masterbatch can be comprised in the master batch of the present invention, in an amount of 0.2 to 50 % by weight.

The present invention do also relate to a process for producing an article, wherein said process comprises use, for example extrusion, of a polymer composition as described herein. Said extrusion may be performed at a temperature of, for example, 140 to 280 °C.

In a further embodiment of the present invention a polymer composition is disclosed, wherein the polymer composition comprises a crosslinked polyolefin, wherein the crosslinked polyolefin is produced by crosslinking the crosslinkable polyolefin comprised in the polymer composition as described herein.

A further embodiment of the invention relates to an article, for example, a coating, a wire or a cable, which article comprises the polymer composition as described herein.

Still a further embodiment of the present invention relates to use of the polymer composition as described herein.

The following examples illustrate, but intend not to limit, the present invention.

### Examples

### 1. Methods

### a. Melt Flow Rate

The melt flow rate (MFR) is determined according to ISO 1133 and is indicated in g/10 min. The MFR for ethylene polymers is determined at 190°C and with a 2.16 kg load (MFR₂).

### b. Water content

Water content of the catalysts may be determined in accordance with the method ASTM E 1064.

Water content of the catalyst masterbatches may be determined by Karl-Fischer titration according to ISO15512.

### 2. Materials

Catalyst masterbatches with different water content of the Nacure^{®} CD-2180, i.e. a highly hydrophobic mixture of C₁₂-alkylated naphthyl sulfonic acids (i.e. silanol condensation catalysts selected from the compound of formula **I**, as described herein), from King Industries, having an active content of 80%, were prepared. The catalyst masterbatches are composed as described Table 1 below.
Amounts are given in weight percentages of the total catalyst masterbatch.

The catalyst carrier is BAR717, i.e. ethylene butylacrylate copolymer, which is supplied by Special Polymers Antwerp. The BAR717 has a butyl acrylate content of 17 weight% and an MFR_{2.16} of 7.5 g/10min. The stabiliser is Lowinox CPL, a phenolic stabilizer from Chemtura , and the drying agent is Dynasylan 9116, HDTMS, hexadecyltrimethoxysilane produced by Evonic.

**Table 1**

| | Catalyst MB A | Catalyst MB B |
|---|---|---|
| BAR717 | 84.3 | 84.3 |
| Nacure CD-2180 (1300 ppm water) | 6.3 | |
| Nacure CD-2180 (50 ppm water) | | 6.3 |
| Stabilizer | 6.4 | 6.4 |
| Drying agent | 3 | 3 |
| | | |

### 3. Sample preparation

Catalyst masterbatches may be prepared by mixing the components in a Banbury kneader at 130°C for 8 minutes. The compounds may afterwards be pelletized on a Buss kneader.

**Table 2. Water content of the catalyst master batch**

| | Catalyst A | Catalyst B |
|---|---|---|
| Water content of catalyst MB (ppm) | 130 | 70 |

Tapes of 1.8 mm with general composition silane copolymer: catalyst masterbatch: (95:5) were extruded using a Collin tape extruder operating at 50 rpm with a temperature profile of 150/160/170 degrees Celsius of the extrusion zones. (See Table 3.)

**Table 3**

| | Comparative Example | Innovative Example |
|---|---|---|
| LE4423 | 95 | 95 |
| Catalyst MB A | 5 | |
| Catalyst MB B | | 5 |

The tape quality with respect to gels caused by pre-crosslinking in the extruder, scorch, was visually inspected and classified (Table 4.).

**Table 4**

| | Comparative Example | Innovative Example |
|---|---|---|
| Tape quality | Heavy scorch | Free from scorch |

## Claims

1. A polymer composition, which is a silanol condensation catalyst masterbatch, comprising a matrix, a silane containing drying agent and at least one silanol condensation catalyst, wherein each catalyst has a water content which is 0.1 % by weight, or lower, and is selected from:
**i**) a compound of formula **I**
ArSO₃H **(I)**
or a precursor thereof, wherein
**Ar** is an 1 to 4 alkyl groups substituted aryl, wherein the aryl is phenyl or naphthyl, and wherein each alkyl group, independently, is a linear or branched alkyl with 10 to 30 carbons, wherein the total number of carbons in the alkyl groups is in the range of 20 to 80 carbons;
**ii**) a derivative of **i**) selected from the group consisting of an anhydride, an ester, an acetylate, an epoxy blocked ester and an amine salt thereof which is hydrolysable to the corresponding compound of formula **I**; and
**iii**) a metal salt of **i**) wherein the metal ion is selected from the group consisting of copper, aluminum, tin and zinc.

2. A polymer composition according to any of claim 1, wherein the polymer composition comprises the silane containing drying agent in an amount that renders the water content of the polymer composition to be 100 ppm or less.

3. A polymer composition according to any of claims 1 to 2, wherein **Ar** is naphthyl.

4. A polymer composition according to any of claims 1 to 3, wherein each catalyst is selected from **a)** C₁₂-alkylated naphthyl sulfonic acids;
**b**) a derivative of **a**) selected from the group consisting of an anhydride, an ester, an acetylate, an epoxy blocked ester and an amine salt thereof which is hydrolysable to the corresponding compound **a**); and/or
**c**) a metal salt of **a**) wherein the metal ion is selected from the group consisting of copper, aluminum, tin and zinc.

5. A polymer composition according to any of claims 1 to 4, wherein the polymer composition comprises the "at least one" silanol condensation catalyst in an amount of 0.0001 to 8 wt%.

6. A polymer composition according to any of claims 1 to 5, wherein each catalyst has a water content which is 0.08 % by weight or lower.

7. A polymer composition according to any of claims 1 to 6, wherein each catalyst has a water content which is 0.06 % by weight or lower.

8. A polymer composition according to any of claims 1 to 7, wherein each catalyst has a water content which is 0.05 % by weight or lower.

9. An article, for example, a coating, a wire or a cable, comprising the polymer composition, according to any of claims 1 to 8.

10. A process for producing an article, wherein said process comprises use, for example, extrusion, of a polymer composition according to any of claims 1 to 8.

11. Use of a polymer composition according to any of claims 1 to 8.

## Patentansprüche

1. Polymerzusammensetzung, die ein Silanol-Kondensationskatalysator-Masterbatch ist und eine Matrix, ein Silan mit einem Trocknungsmittel und wenigstens einen Silanol-Kondensationskatalysator umfasst, wobei jeder Katalysator einen Wasseranteil von 0,1 Gewichtsprozent oder weniger aufweist und ausgewählt ist aus:
i) einer Verbindung der Formel I
ArSO₃H (I)
oder einem Präkursor davon,
wobei Ar ein mit 1 bis 4 Alkylgruppen substituiertes Aryl ist, wobei das Aryl Phenyl oder Naphthyl ist und wobei jede Alkylgruppe unabhängig ein lineares oder verzweigtes Alkyl mit 10 bis 30 Kohlenstoffatomen ist, wobei die Gesamtanzahl von Kohlenstoffen in den Alkylgruppen im Bereich von 20 bis 80 Kohlenstoffen liegt,
ii) einem Derivat von i), das aus der Gruppe ausgewählt ist, die aus einem Anhydrid, einem Ester, einem Acetylat, einem Epoxid-blockierten Ester und einem Aminsalz davon, das zu der entsprechenden Verbindung der Formel I hydrolysierbar ist, besteht, und
iii) einem Metallsalz von i) wobei das Metallion aus der Gruppe ausgewählt ist, die aus Kupfer, Aluminium, Zinn und Zink besteht.

2. Polymerzusammensetzung nach Anspruch 1, wobei die Polymerzusammensetzung das Silan mit dem darin enthaltenen Trocknungsmittel mit einem Anteil enthält, der den Wassergehalt der Polymerzusammensetzung auf 100 ppm oder weniger setzt.

3. Polymerzusammensetzung nach Anspruch 1 oder 2, wobei das Ar Naphthyl ist.

4. Polymerzusammensetzung nach einem der Ansprüche 1 bis 3, wobei jeder Katalysator ausgewählt ist aus:
a) C₁₂-alkylierten Naphthylschwefelsäuren,
b) einem Derivat von a), das aus der Gruppe ausgewählt ist, die aus einem Anhydrid, einem Ester, einem Acetylat, einem Epoxid-blockierten Ester und einem Aminsalz davon, das zu der entsprechenden Verbindung a) hydrolysierbar ist, besteht, und/oder
c) einem Metallsalz von a), wobei das Metallion aus der Gruppe ausgewählt ist, die aus Kupfer, Aluminium, Zinn und Zink besteht.

5. Polymerzusammensetzung nach einem der Ansprüche 1 bis 4, wobei die Polymerzusammensetzung den "wenigstens einen" Silanol-Kondensationskatalysator mit einem Anteil von 0,0001 bis 8 Gewichtsprozent umfasst.

6. Polymerzusammensetzung nach einem der Ansprüche 1 bis 5, wobei jeder Katalysator einen Wasseranteil von 0,08 Gewichtsprozent oder weniger aufweist.

7. Polymerzusammensetzung nach einem der Ansprüche 1 bis 6, wobei jeder Katalysator einen Wasseranteil von 0,06 Gewichtsprozent oder weniger aufweist.

8. Polymerzusammensetzung nach einem der Ansprüche 1 bis 7, wobei jeder Katalysator einen Wasseranteil von 0,05 Gewichtsprozent oder weniger aufweist.

9. Artikel, der zum Beispiel eine Beschichtung, ein Draht oder ein Kabel ist und die Polymerzusammensetzung der Ansprüche 1 bis 8 umfasst.

10. Verfahren zum Herstellen eines Artikels, wobei das Verfahren das Verwenden, zum Beispiel das Strangpressen, einer Polymerzusammensetzung der Ansprüche 1 bis 8 umfasst.

11. Verwenden der Polymerzusammensetzung der Ansprüche 1 bis 8.

## Revendications

1. Composition de polymère, qui est un mélange maître de catalyseur de condensation de silanol, comprenant une matrice, un agent de séchage contenant du silane et au moins un catalyseur de condensation de silanol, dans laquelle chaque catalyseur a une teneur en eau qui est de 0,1 % en poids ou moins, et est choisi parmi :
**i)** un composé de formule **I**
ArSO₃H **(I)**
ou un précurseur de celui-ci, dans laquelle
**Ar** est un aryle substitué par 1 à 4 groupes alkyle, l'aryle étant un phényle ou un naphtyle, et chaque groupe alkyle, indépendamment, étant un alkyle linéaire ou ramifié avec 10 à 30 carbones, le nombre total de carbones dans les groupes alkyle étant dans la plage allant de 20 à 80 carbones ;
**ii)** un dérivé de **i)** choisi dans le groupe constitué d'un anhydride, d'un ester, d'un acétyle, d'un ester époxy bloqué et d'un sel d'amine de ceux-ci, qui est hydrolysable en le composé correspondant de la formule I ; et
**iii)** un sel métallique de i), l'ion métallique étant choisi dans le groupe constitué par le cuivre, l'aluminium, l'étain et le zinc.

2. Composition de polymère selon la revendication 1, dans laquelle la composition de polymère comprend l'agent de séchage contenant du silane en une quantité qui rend la teneur en eau de la composition de polymère inférieure ou égale à 100 ppm.

3. Composition de polymère selon l'une quelconque des revendications 1 à 2, dans laquelle **Ar** est un naphtyle.

4. Composition de polymère selon l'une quelconque des revendications 1 à 3, dans laquelle chaque catalyseur est choisi parmi
**a)** les acides naphtylsulfoniques alkylés en C₁₂ ;
**b)** un dérivé de **a)** choisi dans le groupe constitué d'un anhydride, d'un ester, d'un acétyle, d'un ester époxy bloqué et d'un de leurs sels d'amine, hydrolysable en le composé **a)** correspondant ; et/ou
**c)** un sel métallique de **a),** l'ion métallique étant choisi dans le groupe constitué par le cuivre, l'aluminium, l'étain et le zinc.

5. Composition de polymère selon l'une quelconque des revendications 1 à 4, dans laquelle la composition de polymère comprend « l'au moins un » catalyseur de condensation de silanol en une quantité de 0,0001 à 8 % en poids.

6. Composition de polymère selon l'une quelconque des revendications 1 à 5, dans laquelle chaque catalyseur a une teneur en eau qui est de 0,08 % en poids ou moins.

7. Composition de polymère selon l'une quelconque des revendications 1 à 6, dans laquelle chaque catalyseur a une teneur en eau qui est de 0,06 % en poids ou moins.

8. Composition de polymère selon l'une quelconque des revendications 1 à 7, dans laquelle chaque catalyseur a une teneur en eau qui est de 0,05 % en poids ou moins.

9. Article, par exemple revêtement, fil ou câble, comprenant la composition de polymère selon l'une quelconque des revendications 1 à 8.

10. Procédé de production d'un article, dans lequel ledit procédé comprend l'utilisation, par exemple, l'extrusion, d'une composition de polymère selon l'une quelconque des revendications 1 à 8.

11. Utilisation d'une composition de polymère selon l'une quelconque des revendications 1 à 8.
